# EUROPEAN PATENT SPECIFICATION

(11) **EP 3 412 422 B1**
(45) Date of publication and mention of the grant of the patent: **13.05.2020**
(21) Application number: 18176599.1
(22) Date of filing: 07.06.2018
(51) Int. Cl.: B29B 17/00, B29B 13/06, B29B 9/02, B29C 48/76

(54) **INTEGRATED METHOD, SYSTEM AND MACHINE FOR RECYCLING PULPER REJECT INTO RAW MATERIAL APPLICABLE AS INPUT FOR INJECTION MOULDING PRODUCTION OF VARIOUS PRODUCTS OBTAINED FROM SAID METHOD AND MACHINE**
INTEGRIERTES VERFAHREN, SYSTEM UND MASCHINE ZUM RECYCLING VON PULPER-REJECTS IN ROHMATERIALIEN, DIE ALS ZUGABE ZUR SPRITZGIESSHERSTELLUNG VON VERSCHIEDENEN PRODUKTEN ANWENDBAR SIND, DIE AUS BESAGTEN VERFAHREN UND MASCHINE ERHALTEN WERDEN
PROCÉDÉ INTÉGRÉ, SYSTÈME ET MACHINE DE RECYCLAGE DE REJETS DE PULPEUR DANS UNE MATIÈRE PREMIÈRE APPLICABLES EN TANT QU'ENTRÉE DE MOULAGE PAR INJECTION POUR LA PRODUCTION DE DIVERS PRODUITS OBTENUS À PARTIR DUDIT PROCÉDÉ ET DE LADITE MACHINE

(30) Priority: 08.06.2017 BR 102017012176
(43) Date of publication of application: 12.12.2018
(73) Proprietor: WAVA VENTURES FZCO., Jebel Ali, Dubai (AE)
(72) Inventor:
(74) Representative: Lucke, Andreas

(56) References cited:
- EP-A1- 2 123 418
- EP-A1- 2 463 071
- EP-A1- 2 942 173
- WO-A1-2011/022828
- WO-A1-2012/100465
- WO-A2-2012/035308
- CN-A- 102 492 065
- DE-A1- 4 428 867
- DE-A1-102012 206 100
- DE-T5-112015 002 889
- JP-B1- 4 505 038
- US-A1- 2010 092 794
- US-A1- 2014 004 335

## Description

### FIELD OF THE INVENTION

The present invention relates to an integrated method, system and machine for recycling pulper reject which, after extraction of major part of cellulose, is without any further separation of its components transformed into a raw material that can be used as input material, preferably in injection-moulding-based processes.

This invention relates to the field of technologies for recycling industrial waste, especially recycling of waste known as pulper reject (or hydrapulper reject). Essentially, pulper reject is a type of wet waste coming from recycling waste paper in paper mills and includes mostly cellulose, mixed plastics, and or aluminium. More precisely, pulper reject defined by the European Commission Waste code 030307.

### BACKGROUND OF THE INVENTION

Paper recycling is a widely used technology in order to reclaim cellulose from waste paper, which is then reused for production of paper. However, smaller portion of cellulose usually remains in the pulper reject. Plastics that is a part of pulper reject could also be recycled in dedicated facilities; however, this means that plastics must be first extracted from the pulper reject in a separate process.

However, no suitable integrated methods are known for recycling pulper reject, which, in addition to cellulose and chemically different types of plastics contains also additional inorganic and organic inerts such as aluminium and rubber. Such pulper reject comes from cellulose recycling of multi-layered laminated cardboard-plastic-aluminium products. Such products are widely used especially in food packaging industry. Tetra-Pak® packages are an example of such a type of packages.

More generally no integrated method, system and machine is known for recycling any kind of waste which is composed of paper and plastics, and of paper and cardboard/ plastics/aluminium film known under recycling codes #81 and #84 defined in the List of resin identification codes (RIC) and codes defined by the European Commission.

The dry matter of said pulper reject is predominantly composed by thermoplastic film and parts of cellulosic fibres (from 5% to 40%), aluminium foil (up to 25%), mixed plastics such as Polyvinyl Chloride (PVC), Polyethylene Terephthalate (PET), Acrylonitrile Butadiene Styrene (ABS), rubber, etc. (up to 15%) and other materials (metals, stones, glass, other organic matter, etc. - up to 5%). The_unpredictably varying and heterogeneous composition of the reject is the main reason why no technology for their recycling exists. Consequently, said reject is to a large extent considered as an industrially unusable waste and is therefore disposed of either in landfills or incinerated. However, both methods are inadequate from ecological point of view.

### PRIOR ART OF THE INVENTION

An extensive patent search over the prior art reveals that no integrated technology for recycling pulper reject waste known under codes #81 and #84 exists. Prior art reveals only partial processes of recycling such material, these processes being additionally limited to recycling specific waste composition and/or final output. The following two patent documents deal specifically with the recycling of pulper reject and thus deserve to be commented.

The document EP 0570757 A1 for example discloses a method and machine for separating paper fibre from mixed waste materials which contain one or more sources of paper fibre in order to obtain substantially pure paper fibre which can be recycled to high grade end uses. In addition, the process and machine which separates plastics with or without metal in order to obtain substantially pure plastic which can be recycled to high grade end uses is disclosed.

Also, Figures 1 and 2 of EP 0570757 A1 shows a method that demands a complex machine which *inter alia* includes a multi-step drying process, material pulverization and filtration by extrusion, the consequence being high energy consumption. Moreover, when pulper reject contains aluminium, then aluminium is separated in order to obtain pure plastic and aluminium respectively. Either plastic or aluminium could then be used as raw material in separate processes, what essentially means that this method comprises three separated recycling processes (cellulose fibre, plastic, aluminium) which are usually placed in different locations.

The document US 5084135 describes a method to reclaim plastics from pulper reject by separating it from cellulose fibre and water in the form of plastic pellets extrusion by reducing the cellulosic fibre and water content of hydrapulper plastic coating waste, recovering recyclable plastic and paper. In this sense, plastic pellets produced by this method are not intended for use in conventional plastic moulding and extrusion operations where virgin resins, or combinations of virgin resin and substantially fibre-free regrind or off-spec resin, are normally employed. Instead, the plastic pellets produced according to this method are particularly well suited for use in making extruded composite products comprising a discontinuous phase of aligned cellulosic fibres dispersed in a continuous phase of polymeric resin.

Additionally, the method of US 5084135 does not provide for recycling of pulper reject which contains a mix of organic and inorganic inerts such as aluminium and rubber and therefore the output of the described method are plastics which explicitly are not suitable to be reused as raw material in injection moulding processes but only in continuous extrusion processes.

Therefore, similarly to EP 0570757 A1, the method of US 5084135 is also characterized by high energy consumption due to the fact that it involves a vaporization (and complete drying) stage.

A method for recycling waste material is known from EP 2942173 A1. Different configurations of a screw for a machine for recycling waste material are described in JP 4505038 B1 and in WO 2012/100465 A1.

In view of the problems of the prior art presented above, the aim and purpose of the present invention is to eliminate the shortcomings and deficiencies of known prior art by a novel integrated method, system and machine for recycling pulper reject which, after extraction of major part of cellulose, can be without any further separation of its components transformed into a raw material, applicable as input material, preferably in injection-moulding-based processes.

### DESCRIPTION OF THE INVENTION

This invention represents an integrated method, system and machine for pulper reject recycling to raw material applicable for the production of various products using an injection moulding process whereas an integrated moisture reduction and compacting machine from mechanically separated rejects from pulping of waste paper. The method and machine according to this invention is capable of recycling any pulper reject including multi-layered (laminated) cardboard packages containing a plastic film layers and/or multi-layered cardboard packages containing plastic film layers and aluminium foil layers, in a single recycling line, thus solving all the technological shortcomings and deficiencies of prior art.

Moreover, the present invention represents a method, which significantly contributes to improved environmental protection, because, by recycling currently considered non-recyclable and industrially unusable waste into an industrially useful material, which enables to make useful products from this particular waste, it makes ecologically unsuitable practice of depositing the waste either in landfills or incinerating them obsolete and unnecessary.

Another advantage of the present invention is that it significantly reduces aggregate energy consumption during the whole method compared to currently available methods of the separate processes.

A further advantage of the present invention is that procedures for recycling just the plastic portion of the waste alone are usually made outside the paper mills where the waste is generated, thus implying a transport of the waste thus contributing to increased costs and burden to the environment.

The pulper reject (after paper mills have removed the cellulose portion) especially from Tetra-Pak® containers (and similar plastic laminated-coated paper consumer packaging), must be considered a distinct and higher quality raw material coming from the same process. The classic pulper reject plastics can be best used in injection moulding if mixed with Tetra Pak® reject treated with an integrated moisture reduction and compacting machine or similar, thus allowing the plastic end products to be made of 100% (processed) pulper reject mixed plastic material.

The waste the invention is focusing on consist primarily of Low-density Polyethylene (LDPE) film with the residue of aluminium foil to be used to produce different finished products mainly for the transport industry, building industry and agriculture (pallets, crates, bottle boxes *etc*.).

Therefore, one or more objectives of the present invention are achieved by an integrated method system and machine for recycling pulper rejects from any source, for example packages with thin plastic film, specially packages that also comprise an aluminium foil layer, comprising the steps of: receiving a pulper reject that shall comprise cellulose, plastic, water and impurities from a previous washing/separating process in the paper mill; moisture removing, softening and compacting the pulper reject, obtaining a plastic raw material; and feeding a thermoplastic transformation machine with the raw material to obtain a plastic product.

One or more objectives of the present invention are also achieved by a method as defined in claim 1.

One or more objectives of the present invention are also achieved by a machine for recycling pulper reject into raw material defined in claim 7.

One or more objectives of the present invention are also achieved by a system for recycling pulper reject according to claim 10.

Finally, one or more objectives of the present invention is achieved by a product which is, however, not separately claimed. The product is consisting of: more than 70% of plastic materials; 0 to 10% of cellulose fibre; 0,5 to 25% of aluminium; and the remaining defined by impurities, said product being obtained from a thermoplastic transformation process using the recycled raw material obtained from the method and machine above.

### BRIEF DESCRIPTION OF THE FIGURES

Figure 1 illustrates a schematic presentation of the process used to prepare the pulper reject obtained from the recycled material.
Figure 2 illustrates a perspective external view of a preferred embodiment of the integrated moisture reduction and compacting machine of the present invention.
Figure 3 illustrates a cross-sectional view of a preferred embodiment of the integrated moisture reduction and compacting machine of the present invention.
Figure 4 illustrates a cross-sectional view of a preferred embodiment of the integrated moisture reduction and compacting machine of the present invention, showing the stages of its operation.

### DETAILED DESCRIPTION OF THE INVENTION

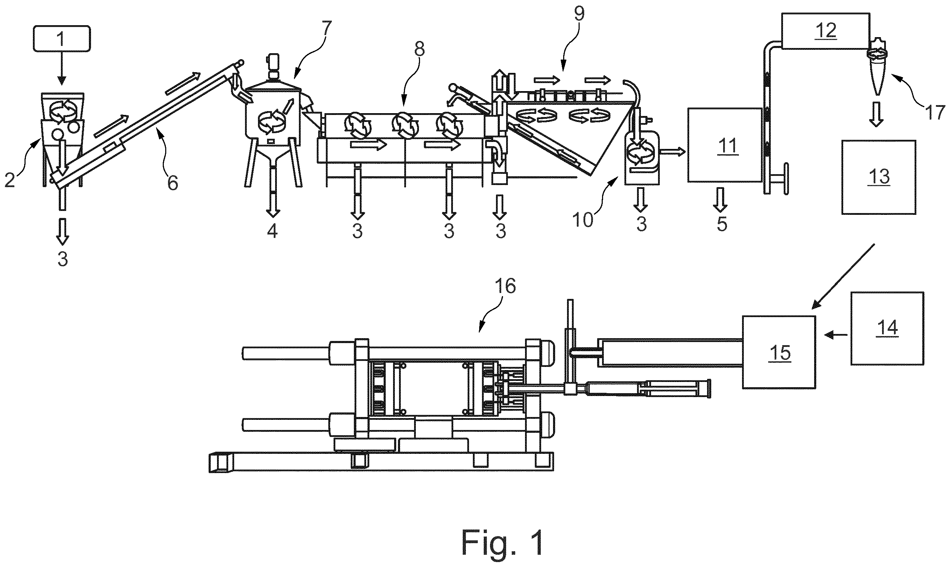

The system and related machines of preparing the pulper reject to obtain raw material is represented in figure 1, as an example of situation where the recycled package is a Tetra-Pak®, therefore comprised mainly from cellulose from cardboard, LDPE from plastic film and aluminium from the inner layer.

The recycling of pulper reject with or without aluminium foil and inerts to manufacture of thick wall plastics products can be divided in three phases: Cleaning, separating (five machines); moisture removing, softening, compacting (one machine); Injection Moulding (one machine + moulds), especially low pressure injection moulding.

The uniqueness is mostly the phase 2 and 3 because with just two machines using the proposed method quality thick wall plastic products can be produced using injection moulding process with high productivity, product quality, low energy consumption compared to known methods for such material.

The method and the system for recycling pulper reject into raw material of the present invention are described below, wherein the parts and equipment define the system and the process of the pulper reject thought said equipment define the method steps.

### Phase 1 - Cleaning, separating

The method of cleaning and separation is similar to the additional (secondary) cleaning by knowing methods used by paper mills to recover cellulosic fibres and reduce the weight of the rejects. These lines should be composed depending on the composition of the pulper reject.

The typical composition includes the steps of: introducing the material 1 in a size reduction unit 2 to reduce the material 1 to a maximum dimension up to 80 x 80 mm parts, for example, in order to achieve an improved operation of the process. In this step, an outlet 3 allows the removal of water and cellulose. The material 1 is then transported by a moisture removing screw conveyor 6 to a reactor 7 where it is processed through a dynamic separation tank with hot washing to eliminate heavy materials (metal, stones, glass etc.), eliminated by an outlet 4.

In the sequence, the material 1 is transported through a rotating drum for pre-wash 8, to separate some cellulosic fibres, through a washing/floating tank 9 for separation of heavy plastics (PET, PVC ...) and through a washing centrifugal machine to extract the greater part of cellulosic fibre content by an outlet 3.

While in the rotating drum 8 and washing/flotation tank 9, the parts of the material 1 with lower density floats and follows to the washing centrifugal machine 10, while the parts with higher density return to the rotating drum 8 and are removed by the outlets 3. It shall be noted that LDPE has an average density of 0,91 to 0,93 g/cm³, the aluminium has an average density of 2,70 g/cm³ and the cellulose has an average density of 1,50 g/cm³, therefore the LDPE has more chance remain in the process.

The output material from this cleaning/separating phase comes in form of water slurry. The requirements for the composition of the dry matter of this material at the end of the steps described above are:
- more than 70% Polyolefin-based mixed plastics;
- 0 to 10% Cellulose fibre;
- 0,5 to 25% Aluminium foil;
- 0 to 5% Other plastics (PVC, PET, ABS, rubber, etc.);
- 0 to 3% Other materials (metals, stones, glass, etc.).

Unless stated otherwise, any percentage given herein relates to % by weight.

### Phase 2 - Moisture removing, softening, compacting

The prior art process to prepare the material for thermoplastic transformation such as injection moulding requires several steps: drying, densifying, compounding, cooling, and shredding. All of which requires a lot of energy and several separate machines.

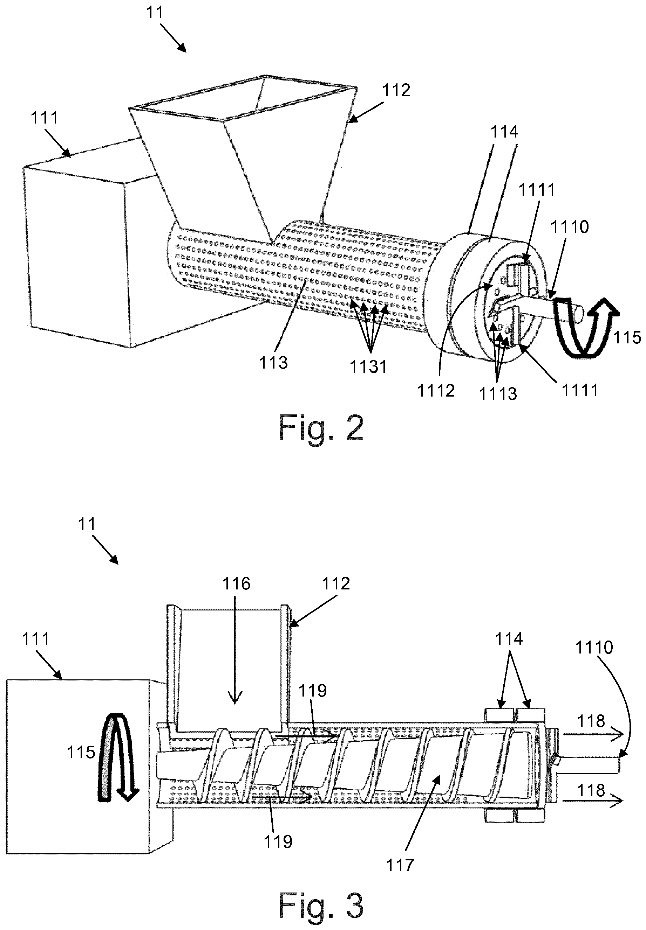

In contrast to known processes, under the process according to present invention there is no need to remove water from output from phase 1 in a separate machine because moisture reduction from it is carried out in phase 2 simultaneously with the softening and compacting in an Integrated Moisture Reduction and Compacting machine 11 (hereinafter IMRC), as shown in figures 2, 3 and 4. Therefore a drying or squeezing machine and separate press to put the rejects in baled form are not needed according to present invention. This is an additional advantage of this method because the energy consumption is significantly reduced through reduction of the number of required devices. Moreover, the required purity of the material for processing in phase 3 is much lower compared to known thermoplastic transformation technologies.

Moisture content in output material from phase 1 is in IMRC then removed so that its humidity is reduced under 12%, preferably under 5%, and simultaneously softened and compacted so that it can be then directly fed into thermoplastic transformation machine that is part of phase 3. The lesser requirements needed to operate a low pressure injection moulding machine 16 allow the preparation of the feed material using lower temperatures, hence with lower costs and with only one step process on a specially designed moisture removing, softening and compacting machine 11.

The IMRC machine 11 receives the material resulted from the phase 1 and reduces moisture by an outlet 5 and delivers raw material for use in a thermoplastic transformation machine 16. Therefore, from now on the moisture removing, softening and compacting machine 11 will also be named as machine for manufacturing raw material from pulper reject.

The machine 11 comprise a main drive 111 connected to a compression means that operates inside a cylinder 113, transporting the material obtained from the phase 1 to an outlet 118 in a direction 119. Said compression means shall be any solution from the prior art able to allow the movement of the material. In a preferred embodiment, the compression means is formed as a conical screw 117.

The machine 11 receives the material from a water slurry continuously loaded in a hopper 112. The conical screw 117 is connected to the main drive, producing a rotational movement 115 continuously with high torque on low rpm.

The conical screw 117 rotates inside the cylinder 113, and has the fillets defining a cylindrical shape allowing its movement and juxtaposition within the cylinder 113. The base of the fillets, however, comprise a conical shape defining a first end with a smaller inner diameter and a second end with a greater inner diameter. In this sense, the region defined between the inner wall of the cylinder and the conical screw 117 diameter reduces along it length.

The smaller inner diameter is disposed in a first end of the conical screw 117 near to the feeding hopper 12, and the greater inner diameter is displaced in a second end of the conical screw 117 near to an outlet 118, in order to gradually compress the material against the inner wall of the cylinder 113. Said cylinder 113 comprises a plurality of holes 1131 that allow the passage of moisture or water 1121, retaining inside the cylinder 113 the material 1122.

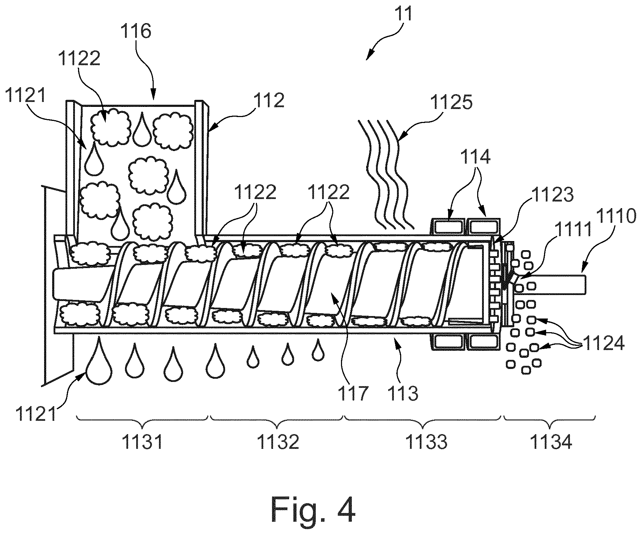

The compression process described above occurs basically in three stages, as follows: admission and start of compression 1131; compression 1132; and compression combined with heating 1133, as illustrated in figure 4.

During the stage of admission and compression 1131, the material 1122 and residual moisture or water 1121 obtained from the phase 1, as described above or any other equivalent process, enters in the machine 11 by an opening 116 in the feeding hopper 112. The rotation of the conical screw 117 starts moving the material along to the cylinder 113 length and a first part of moisture or water 1121 is removed by the compression against the inner wall of the cylinder 113.

In the sequence, during the compression stage 1132, the region between the conical screw 117 and the inner wall of the cylinder 113 reduces more, squeezing the material 1122 and removing more moisture or water 1121 by the holes 1131.

Finally, in the stage of compression and heating, a heating device 114 disposed close to the outlet 118 of the machine 11 starts a softening process of the material 1122 and provides the removal of the few residual moisture or water 1121 by means of evaporation, obtaining a melted recycled rejects 1123. The steam 1125 leaves the cylinder 113 by the holes 1131. For the present invention, said softening process is a pre-melting process, i. e. a process of heating the material to a temperature below to its melting temperature but capable to soften the material.

Said heating device 114 is preferably an electric resistance installed surrounding the outlet 118, or any other equivalent heating source capable of heating the outlet 118 region to a temperature of at least 110 °C.

In the sequence, the soft recycled rejects 1123 are pressurized by the rotation of the conical screw 117 against an extrusion plate 1112 and leave the machine 11 through holes 1113, solidifying into a recycled raw material to be used in a thermoplastic transformation machine 16 in the phase 3, detailed below. Said recycled raw material is composed by the remaining substances from the processes steps above, mainly plastic, aluminium and other inerts.

Optionally, the outlet 118 further comprises at least one cutting tool 1111 connected to a rotating axis 1110 to cut the recycled raw material into small pellets 1124, preferably into parts with 4 mm to 15 mm of diameter by 4 mm to 15 mm of length. Preferably, said rotating axis 1110 is coupled to the conical screw 117, in order to obtain the rotational movement 115 from the main drive 111, having the cutting rotational movement synchronized to the ration of recycled raw material that leaves through the holes 1113, warranting a standard size of the pellets 1124. Said sequence is represented by the step 1134 of figure 4.

In view of the exposed above, in the "integrated moisture reduction and compacting machine" the sections 1131 and 1132 define a first moisture removing stage, where the material 1122 is squeezed between the cylinder 113 and the internal part of the screw 117 because the inner diameter of the screw 117 continuously increases. In those sections, the material 1122 is squeezed under big pressure, and in the section 1133 the temperature of the material 1122 increase and the moisture or water 1121 leaves through the holes 1131 in the cylinder 113.

The heating section 1133 defines a second moisture removing stage, where the material 1122 temperature reaches at least 100°C, so that the remaining water 1121 evaporates and the material 1122 has a softening process. The working process is similar to an extrusion process, where the material 1122 is pushed against an extrusion plate 1112 and leaves the machine through holes 1113. This section 1133 has also electric heaters 114 and optionally also comprises water cooling rings to control the temperature into a defined range of preferred working temperature.

In the "Cutting/cooling" section 1134, the rotating knives 1111 cut the material that comes through the holes 1113 in the extrusion plate 1112. These pellets 1124 are preferably transported with pneumatic system 12 to the next phase of the recycling process, so the air cools the material 1124 during the transportation, passing into a prolonged cyclone 17 until a storage 13. The temperature of the material before entering in the storage 13 must be under 80°C in order to avoid the melting between the storage pellets 1124.

Temperatures are controlled with the thermal sensor in the final part and regulated with the dosing of the material and with the cooling and heating of the final part.

It must be noted that the machine (16) is a multi-purpose or multifunctional machine that makes it possible to perform moisture removing, softening, compacting and extruding mixed aluminium and plastics or even plastics composed of different types of plastics, wherein said machine (16) allows the recycling of the essentially two-component waste, one component being aluminium, and the other being plastics, whereby this second component itself could be a mix of chemically different types of plastics.

### Phase 3 - Thermoplastic transformation

In a preferred embodiment of the invention, an injection moulding machine allows the thermoplastic transformation. The injection has advantage over other thermoplastic transformation processes due to the higher level of complexity of the products that can be obtained in comparison to other thermoplastic transformation processes, such as extrusion. Also, the injection moulding machine is properly adapted and has the simultaneous function of mixing and degassing recycled raw material 1124.

Optionally, the injection moulding machine shall use a mix of the recycled raw material 1124 and plastics or additives from a storage 14, therefore these materials are mixed before entering the injection moulding machine by a dosimeter 15. The use of plastic and additives with the recycled raw material 1124 provides competitive technical characteristics of some products that requires higher quality standards.

For an injection moulding machine functional concept, the extruder, loaded by the dosing system, works in a continuous process and feeds the storage head, which allows injecting into the mould the stored load equivalent to the weight of the product. The aim of the extruder is to plasticize, homogenize and degas the material for the subsequent injection; the plasticization process occurs due to the mechanical action of the extruder also due to the heat input realized by means of a thermoregulation system.

Once the material has been injected into the mould, the system cools it down. The unit is completed by devices for opening and closing the moulds. The product is extracted with any appropriate method.

In addition, this technology is able to work with different recipes using other plastics residual, recyclable plastics from the polyolefin family - Low-density polyethylene (LDPE), Linear low-density polyethylene (LLDPE), High-density polyethylene (HDPE), or Polypropylene (PP) - as raw material with or without different types of low cost fillers in accordance with the mechanical characteristic and final quality required for specifics finished products.

Regarding the recycled raw material resulted from phase 1 and 2, as described above, its composition may be different from batch to batch, depending on the source of material being recycled.

However, if the material recycled is mainly Tetra-Pak® packages, the final recycled raw material is stable and homogeneous having 0,1-10% cellulose content, 0,5 to 25% of Aluminium, the rest being formed by plastics from Polyolefin family of plastics (LDPE, HDPE, PP *etc*.).

It shall be noted that the present invention has good results in the manufacture of low-pressurized injection processes using a plastic recycled raw material, wherein said raw material shall be obtained from any recycled package with a plastic film layer, especially from Tetra-Pak® packages, the injected material shall be 100% from recycled raw material 1124 or a mixture of plastic new raw material or additives and recycled raw material in any proportion comprising from 1 to 99% of recycled raw material.

Finally, the present invention also refers to a product having its composition consisting of at least 75 % of mixed plastic material, less than 10% of cellulose fibre, 0,5 to 25% of aluminium and the remaining defined by impurities. The range of the components are defined by the pulper reject 1 properties and by the quality of the cleaning/separation system or process used.

Examples of products that shall be manufactured from this recycled raw material are: plastic pallets; plastic boxes (*e.g*. plastic transport boxes); or any other products that does not require high dimensional precision, controlled physical properties or no impurities in the composition. Mainly, these products should be low aggregated value products.

It must be noted that despite the embodiments described above, the present invention can be used in different manners and shall present modifications, so its protection is defined according to the scope of the attached claims, including its possible equivalent variations.

## Claims

1. A method for recycling pulper reject comprising the steps of:
A. receiving a pulper reject (1) from a previous washing/separating process, wherein the pulper reject (1) comprises more than 70% by weight of Polyolefin-based mixed plastics, 0 to 10% by weight of cellulose fibre, 0,5 to 25% by weight of aluminium foil, 0 to 5% by weight of other plastics and 0 to 3% by weight of other materials;
B. simultaneous moisture removing, softening and compacting the pulper reject by an integrated moisture reduction and compacting machine, wherein the machine comprises:
a. main drive (111);
b. feeding hopper (112);
c. cylinder (113) with a plurality of holes (1131) for allowing the passage of moisture or water;
d. compression means;
e. heating device (114); and
f. extrusion plate (1112);
wherein the compression means comprise or are formed by a conical screw (117) mounted inside the cylinder (113) with holes (1131), wherein the conical screw (117) comprises filets defining a cylindrical shape within the cylinder (113) and a base of the filets having a conical shape, wherein an inner diameter of the base of the filets of the screw continuously increases along its length, wherein:
i. a smaller inner diameter is arranged at a first end of the conical screw (117) near to the feeding hopper (12); and
ii. a greater inner diameter is arranged at a second end of the conical screw (117) near to an outlet (118), wherein
the main drive (111) is preferably operatively connected to the conical screw (117), for providing a rotational movement (115) around a central longitudinal axis of the conical screw (117);
obtaining a recycled raw material (1124); and
iii. feeding a thermoplastic transformation machine (16) with the raw material (1124) to obtain a product.

2. The method according to claim 1, **characterized in that** the step or steps of moisture reducing, softening and compacting the pulper reject comprise:
a. a first moisture removing stage comprising pressing the pulper reject; and
b. a second moisture removing, softening and compacting stage comprising pressing and heating the pulper reject, evaporating the water contained in the pulper reject, such heating simultaneously softening the plastic material.

3. The method according to claim 2, **characterized in that** the step or steps of moisture removing, softening and compacting the pulper reject further comprise the sub steps of:
a. pushing soft recycled reject (1123) against an extrusion plate (1112);
b. cooling and cutting the extruded material in small parts, defining the recycled raw material (1124).

4. The method according to claims 1 or 3, **characterized in that** the thermoplastic transformation machine (16) is an injection moulding machine that is fed only with the recycled raw material (1124).

5. The method according to claims 1 to 3, **characterized in that** the thermoplastic transformation machine (16) is an injection machine, wherein said injection machine is fed with a mixture of recycled raw material (1124) and non-recycled raw material, wherein
the ratio of recycled raw material in the mixture that feeds the injection moulding machine is preferably from 1 to 99% by weight.

6. The method according to any of claims 1 to 5, **characterized in that** the pulper reject (1) is obtained from foodstuff packages comprising paper or cardboard, at least one layer comprising aluminium and at least one layer comprising plastic, and in particular obtained from Tetra-Pak® packages.

7. A machine (11) for recycling pulper reject into raw material, wherein the machine comprises:
a. main drive (111);
b. feeding hopper (112);
c. cylinder (113) with a plurality of holes (1131) for allowing the passage of moisture or water;
d. compression means;
e. heating device (114); and
f. extrusion plate (1112);
wherein the compression means comprise or are formed by a conical screw (117) mounted inside the cylinder (113) with holes (1131), wherein the conical screw (117) comprises filets defining a cylindrical shape within the cylinder (113) and a base of the filets having a conical shape, wherein an inner diameter of the base of the filets of the screw continuously increases along its length, wherein:
a. a smaller inner diameter is arranged at a first end of the conical screw (117) near to the feeding hopper (12); and
b. a greater inner diameter is arranged at a second end of the conical screw (117) near to an outlet (118), wherein
the main drive (111) is preferably operatively connected to the conical screw (117), for providing a rotational movement (115) around a central longitudinal axis of the conical screw (117);
wherein the heating device (114) is an electric resistance installed surrounding the outlet (118).

8. The machine (16) according to claim 7, **characterized in that** the feeding hopper (12) defines a feeding opening in the cylinder (113).

9. The machine according to any of claims 7 or 8, **characterized in that** an outlet (118) comprises the extrusion plate (1112), said extrusion plate (1112) being associated to a cutting device (1111) for cutting an extruded raw material (1124).

10. A system for recycling pulper rejectcomprising:
a. cleaning/separating machine;
b. an integrated moisture removing, softening and compacting machine; and
c. a thermoplastic transformation machine,
wherein said moisture removing, softening and compacting machine is defined by a machine as described in claims 7 to 9 and the thermoplastic transformation machine is a low-pressure injection moulding machine.

11. The system according to claim 10, **characterized in that** the cleaning/separating machine comprises:
a. a size reduction unit (2) capable of reducing a pulper reject (1) to a maximum dimension of 80 mm by 80 mm parts or lower, said size reduction unit (2) comprising outlet an (3) for removal of water and cellulose;
b. a moisture removing screw conveyor (6) connecting the size reduction unit (2) to a reactor (7), said reactor (7) processing the pulper reject (1) through a dynamic separation tank with hot washing, the reactor comprising an outlet (4) for removal of heavy materials, in particular stones, glass and similar impurities;
c. a rotating drum (8) capable of pre-washing the pulper (1) and connecting the reactor (7) to a washing/flotation tank (9);
d. wherein the washing/flotation tank (9) is configured for transporting the lower density material to a washing centrifugal machine (10) and the heavier density materials back to the rotating drum (8);
e. wherein the washing centrifugal machine (10) connects the washing flotation tank (9) to a moisture removing, softening and compacting machine (11); and
f. wherein the washing centrifugal machine (10) comprises an outlet (3) for removal of higher density material.

## Patentansprüche

1. Verfahren zum Wiederverwerten von Pulper-Rückständen, das die folgenden Schritte umfasst:
A. Empfangen eines Pulper-Rückstands (1) aus einem vorherigen Wasch-/Trennverfahren, wobei der Pulper-Rückstand (1) mehr als 70 Gew.-% Mischkunststoffe auf Polyolefinbasis, 0 bis 10 Gew.-% Zellulosefasern, 0,5 bis 25 Gew.-% Aluminiumfolie, 0 bis 5 Gew.-% andere Kunststoffe und 0 bis 3 Gew.-% andere Materialien umfasst;
B. gleichzeitiges Entfernen von Feuchtigkeit, Erweichen und Verdichten des Pulper-Rückstands durch eine integrierte Feuchtigkeitsreduktions- und Verdichtungsmaschine, wobei die Maschine Folgendes umfasst:
a. einen Hauptantrieb (111);
b. einen Einfülltrichter (112);
c. einen Zylinder (113) mit einer Vielzahl von Öffnungen (1131), die den Durchgang von Feuchtigkeit oder Wasser ermöglichen;
d. Kompressionsmittel;
e. eine Heizvorrichtung (114); und
f. eine Extrusionsplatte (1112);
wobei die Kompressionsmittel eine konische Schraube (117) umfassen oder durch diese ausgebildet sind, wobei die konische Schraube (117) innerhalb des Zylinders (113) mit Öffnungen (1131) montiert ist, wobei die konische Schraube (117) Lamellen umfasst, die eine zylindrische Form innerhalb des Zylinders (113) definieren, und wobei eine Basis der Lamellen eine konische Form aufweist, wobei ein Innendurchmesser der Basis der Lamellen der Schraube entlang der Länge der Basis kontinuierlich zunimmt, wobei:
i. ein kleinerer Innendurchmesser an einem ersten Ende der konischen Schraube (117) nah am Einfülltrichter (12) angeordnet ist; und
ii. ein größerer Innendurchmesser an einem zweiten Ende der konischen Schraube (117) nah an einem Auslass (118) angeordnet ist, wobei
der Hauptantrieb (111) vorzugsweise mit der konischen Schraube (117) operativ verbunden ist, um eine Drehbewegung (115) um eine zentrale Längsachse der konischen Schraube (117) zu ermöglichen;
Erhalten eines wiederverwerteten Rohmaterials (1124); und
iii. Zuführen des Rohmaterials (1124) zu einer Maschine (16) zur thermoplastischen Verarbeitung, um ein Produkt zu erhalten.

2. Verfahren nach Anspruch 1, **dadurch gekennzeichnet, dass** der Schritt oder die Schritte der Feuchtigkeitsreduzierung, Erweichung und Verdichtung des Pulper-Rückstands Folgendes umfassen:
a. eine erste Phase der Feuchtigkeitsentfernung, die das Pressen des Pulper-Rückstands umfasst; und
b. eine zweite Phase der Feuchtigkeitsentfernung, Erweichung und Verdichtung, die das Pressen und Erwärmen des Pulper-Rückstands und das Verdampfen des im Pulper-Rückstand enthaltenen Wassers umfasst, wobei diese Erwärmung gleichzeitig das Kunststoffmaterial erweicht.

3. Verfahren nach Anspruch 2, **dadurch gekennzeichnet, dass** der Schritt oder die Schritte der Feuchtigkeitsentfernung, Erweichung und Verdichtung des Pulper-Rückstands weiterhin die folgenden Teilschritte umfassen:
a. Drücken von weichen wiederverwerteten Rückständen (1123) gegen eine Extrusionsplatte (1112);
b. Kühlen und Schneiden des extrudierten Materials in kleine Teile, die das wiederverwertete Rohmaterial (1124) bilden.

4. Verfahren nach Anspruch 1 oder 3, **dadurch gekennzeichnet, dass** die Maschine (16) zur thermoplastischen Verarbeitung eine Spritzgussmaschine ist, die nur mit dem wiederverwerteten Rohmaterial (1124) gespeist wird.

5. Verfahren nach den Ansprüchen 1 bis 3, **dadurch gekennzeichnet, dass** die Maschine zur thermoplastischen Verarbeitung (16) eine Spritzgussmaschine ist, wobei die Spritzgussmaschine mit einer Mischung aus wiederverwertetem Rohmaterial (1124) und nicht wiederverwertetem Rohmaterial gespeist wird, wobei der Anteil an wiederverwertetem Rohmaterial in der Mischung, mit der die Spritzgießmaschine gespeist wird, vorzugsweise 1 bis 99 Gew.-% ausmacht.

6. Verfahren nach einem der Ansprüche 1 bis 5, **dadurch gekennzeichnet, dass** der Pulper-Rückstand (1) aus Lebensmittelverpackungen gewonnen wird, die Papier oder Karton, mindestens eine Aluminiumschicht und mindestens eine Kunststoffschicht umfassen, und insbesondere aus Tetra-Pak®-Verpackungen gewonnen wird.

7. Maschine (11) zum Wiederverwerten von Pulper-Rückständen zu Rohmaterial, wobei die Maschine Folgendes umfasst:
a. einen Hauptantrieb (111);
b. einen Einfülltrichter (112);
c. einen Zylinder (113) mit einer Vielzahl von Öffnungen (1131), um den Durchgang von Feuchtigkeit oder Wasser zu ermöglichen;
d. Kompressionsmittel;
e. eine Heizvorrichtung (114); und
f. eine Extrusionsplatte (1112);
wobei die Kompressionsmittel eine konische Schraube (117) umfassen oder durch diese ausgebildet sind, wobei die konische Schraube (117) innerhalb des Zylinders (113) mit Öffnungen (1131) montiert ist, wobei die konische Schraube (117) Lamellen umfasst, die eine zylindrische Form innerhalb des Zylinders (113) definieren, und wobei eine Basis der Lamellen eine konische Form aufweist, wobei ein Innendurchmesser der Basis der Lamellen der Schraube entlang der Länge der Basis kontinuierlich zunimmt, wobei:
a. ein kleinerer Innendurchmesser an einem ersten Ende der konischen Schraube (117) nah am Einfülltrichter (12) angeordnet ist; und
b. ein größerer Innendurchmesser an einem zweiten Ende der konischen Schraube (117) nah an einem Auslass (118) angeordnet ist,
wobei die Heizvorrichtung (114) ein elektrischer Widerstand ist, der um den Auslass (118) herum angeordnet ist.

8. Maschine (16) nach Anspruch 7, **dadurch gekennzeichnet, dass** der Einfülltrichter (12) eine Einfüllöffnung im Zylinder (113) definiert.

9. Maschine nach einem der Ansprüche 7 oder 8, **dadurch gekennzeichnet, dass** ein Auslass (118) die Extrusionsplatte (1112) umfasst, wobei die Extrusionsplatte (1112) einer Schneidvorrichtung (1111) zum Schneiden eines extrudierten Rohmaterials (1124) zugeordnet ist.

10. System zum Wiederverwerten von Pulper-Rückständen, das Folgendes umfasst:
a. eine Reinigungs-/Trennmaschine;
b. eine integrierte Feuchtigkeitsentfernung-, Erweichung- und Verdichtungsmaschine; und
c. eine Maschine zur thermoplastischen Verarbeitung,
wobei die Feuchtigkeitsentfernungs-, Erweichungs- und Verdichtungsmaschine durch eine Maschine nach den Ansprüchen 7 bis 9 definiert ist und die Maschine zur thermoplastischen Verarbeitung eine Niederdruck-Spritzgussmaschine ist.

11. System nach Anspruch 10, **dadurch gekennzeichnet, dass** die Reinigungs-/Trennmaschine Folgendes umfasst:
a. eine Zerkleinerungseinheit (2), die dazu geeignet ist, einen Pulper-Rückstand (1) auf eine maximale Bestandteilgröße von 80 mm x 80 mm oder weniger zu zerkleinern, wobei die Zerkleinerungseinheit (2) einen Auslass (3) zur Entfernung von Wasser und Zellulose umfasst;
b. einen Feuchtigkeitsentfernungs-Schraubenförderer (6), der die Zerkleinerungseinheit (2) mit einem Reaktor (7) verbindet, wobei der Reaktor (7) den Pulper-Rückstand (1) durch einen dynamischen Trenntank mit Heißwaschen verarbeitet, wobei der Reaktor einen Auslass (4) zum Entfernen von schweren Materialien, insbesondere Steinen, Glas und ähnlichen Verunreinigungen, umfasst;
c. eine Drehtrommel (8), die dazu geeignet ist, den Pulper (1) vorzuspülen und den Reaktor (7) mit einem Wasch-/Flotationstank (9) zu verbinden;
d. wobei der Wasch-/Flotationstank (9) dazu eingerichtet ist, das Material geringerer Dichte zu einer Waschzentrifuge (10) und die Materialien schwererer Dichte zurück zur rotierenden Trommel (8) zu befördern;
e. wobei die Waschzentrifuge (10) den Waschflotationstank (9) mit einer Feuchtigkeitsentfernungs-, Erweichungs- und Verdichtungsmaschine (11) verbindet; und
f. wobei die Waschzentrifuge (10) einen Auslass (3) zur Entfernung von Material höherer Dichte aufweist.

## Revendications

1. Procédé de recyclage de refus de pulpeur comprenant les étapes suivantes :
A. réception de refus de pulpeur (1) issus d'un précédent processus de lavage et de séparation, dans lequel les refus de pulpeur (1) comprennent plus de 70 % en poids de matières plastiques mélangées à base de polyoléfines, 0 à 10 % en poids de fibre de cellulose, 0,5 à 25 % en poids de feuille d'aluminium, 0 à 5 % en poids d'autres matières plastiques et 0 à 3 % en poids d'autres matières ;
B. l'élimination de l'humidité, le ramollissement et le compactage simultanés des refus de pulpeur par une machine intégrée de réduction de l'humidité et de compactage, dans lequel la machine comprend :
a. un entraînement principal (111) ;
b. une trémie d'alimentation (112) ;
c. un cylindre (113) doté d'une pluralité de trous (1131) pour laisser passer l'humidité ou l'eau ;
d. des moyens de compression ;
e. un dispositif de chauffage (114) ; et
f. une plaque d'extrusion (1112) ;
dans lequel les moyens de compression comprennent ou sont formés par une vis conique (117) montée à l'intérieur du cylindre (113) à trous (1131), dans lequel la vis conique (117) comprend des filets définissant une forme cylindrique à l'intérieur du cylindre (113) et une base des filets ayant une forme conique, dans lequel un diamètre intérieur de la base des filets de la vis augmente de façon continue suivant sa longueur, dans lequel :
i. un plus petit diamètre intérieur est agencé à une première extrémité de la vis conique (117) à proximité de la trémie d'alimentation (112) ; et
ii. un plus grand diamètre intérieur est agencé à une seconde extrémité de la vis conique (117) à proximité d'une sortie (118), dans lequel
l'entraînement principal (111) est de préférence relié fonctionnellement à la vis conique (117), pour fournir un mouvement rotatif (115) autour d'un axe longitudinal central de la vis conique (117) ;
l'obtention d'une matière première recyclée (1124) ; et
iii. l'alimentation d'une machine de transformation thermoplastique (16) avec la matière première (1124) pour obtenir un produit.

2. Procédé selon la revendication 1, **caractérisé en ce que** l'étape ou les étapes de réduction du degré d'humidité, de ramollissement et de compactage des refus de pulpeur comprennent
a. une première phase d'élimination de l'humidité comprenant le pressage des refus de pulpeur ; et
b. une seconde phase d'élimination de l'humidité, de ramollissement et de compactage comprenant le pressage et le chauffage des refus de pulpeur, l'évaporation de l'eau contenue dans les refus de pulpeur, un tel chauffage ramollissant simultanément la matière plastique.

3. Procédé selon la revendication 2, **caractérisé en ce que** l'étape ou les étapes d'élimination de l'humidité, de ramollissement et de compactage des refus de pulpeur comprennent en outre les sous-étapes consistant à :
a. pousser des refus recyclés mous (1123) contre une plaque d'extrusion (1112) ;
b. refroidir et découper la matière extrudée en petites pièces, définissant la matière première recyclée (1124).

4. Procédé selon les revendications 1 ou 3, **caractérisé en ce que** la machine de transformation thermoplastique (16) est une machine de moulage par injection qui est alimentée uniquement avec la matière première recyclée (1124).

5. Procédé selon les revendications 1 à 3, **caractérisé en ce que** la machine de transformation thermoplastique (16) est une machine à injection, dans lequel ladite machine à injection est alimentée avec un mélange de matière première recyclée (1124) et de matière première non recyclée, dans lequel
le rapport de matière première recyclée dans le mélange qui alimente la machine de moulage par injection est de préférence de 1 à 99 % en poids.

6. Procédé selon l'une quelconque des revendications 1 à 5, **caractérisé en ce que** les refus de pulpeur (1) sont obtenus à partir d'emballages alimentaires comprenant du papier ou du carton, au moins une couche comprenant de l'aluminium et au moins une couche comprenant de la matière plastique, et obtenus en particulier à partir d'emballages Tetra-Pak®.

7. Machine (11) permettant de recycler des refus de pulpeur en une matière première, dans laquelle la machine comprend :
a. un entraînement principal (111) ;
b. une trémie d'alimentation (112) ;
c. un cylindre (113) doté d'une pluralité de trous (1131) pour laisser passer l'humidité ou l'eau ;
d. des moyens de compression ;
e. un dispositif de chauffage (114) ; et
f. une plaque d'extrusion (1112) ;
dans laquelle les moyens de compression comprennent ou sont formés par une vis conique (117) montée à l'intérieur du cylindre (113) à trous (1131), dans laquelle la vis conique (117) comprend des filets définissant une forme cylindrique à l'intérieur du cylindre (113) et une base des filets ayant une forme conique, dans laquelle un diamètre intérieur de la base des filets de la vis augmente de façon continue suivant sa longueur, dans laquelle :
a. un plus petit diamètre intérieur est agencé à une première extrémité de la vis conique (117) à proximité de la trémie d'alimentation (112) ; et
b. un plus grand diamètre intérieur est agencé à une seconde extrémité de la vis conique (117) à proximité d'une sortie (118), dans laquelle
l'entraînement principal (111) est de préférence relié fonctionnellement à la vis conique (117), pour fournir un mouvement rotatif (115) autour d'un axe longitudinal central de la vis conique (117) ;
dans laquelle le dispositif de chauffage (114) est une résistance électrique installée de manière à entourer la sortie (118).

8. Machine (16) selon la revendication 7, **caractérisée en ce que** la trémie d'alimentation (12) définit une ouverture d'alimentation dans le cylindre (113).

9. Machine selon l'une quelconque des revendications 7 ou 8, **caractérisée en ce qu'**une sortie (118) comprend la plaque d'extrusion (1112), ladite plaque d'extrusion (1112) étant associée à un dispositif de coupe (1111) destiné à découper une matière première extrudée (1124).

10. Système de recyclage de refus de pulpeur comprenant :
a. une machine de nettoyage et de séparation ;
b. une machine intégrée d'élimination de l'humidité, de ramollissement et de compactage ; et
c. une machine de transformation thermoplastique,
dans lequel ladite machine d'élimination de l'humidité, de ramollissement et de compactage est définie par une machine telle que décrite dans les revendications 7 à 9 et la machine de transformation thermoplastique est une machine de moulage par injection à basse pression.

11. Système selon la revendication 10, **caractérisé en ce que** la machine de nettoyage et de séparation comprend :
a. une unité de réduction de taille (2) capable de réduire des refus de pulpeur (1) à une dimension maximale de 80 mm par 80 mm ou inférieure, ladite unité de réduction de taille (2) comprenant une sortie (3) pour l'élimination d'eau et de cellulose ;
b. un transporteur à vis d'élimination de l'humidité (6) reliant l'unité de réduction de taille (2) à un réacteur (7), ledit réacteur (7) traitant les refus de pulpeur (1) à travers un réservoir de séparation dynamique par lavage à chaud, le réacteur comprenant une sortie (4) pour l'élimination de matières lourdes, en particulier de pierres, de verre et d'impuretés similaires ;
c. un tambour rotatif (8) capable de prélaver le pulpeur (1) et reliant le réacteur (7) à un réservoir de lavage et de flottation (9) ;
d. dans lequel le réservoir de lavage et de flottation (9) est configuré pour transporter les matières de plus faible masse volumique jusqu'à une machine centrifuge de lavage (10) et pour renvoyer les matières de masse volumique plus lourde dans le tambour rotatif (8) ;
e. dans lequel la machine centrifuge de lavage (10) relie le réservoir de lavage et de flottation (9) à une machine d'élimination de l'humidité, de ramollissement et de compactage (11) ; et
f. dans lequel la machine centrifuge de lavage (10) comprend une sortie (3) pour l'élimination des matières de masse volumique plus élevée.
